# EUROPÄISCHE PATENTSCHRIFT

(11) **EP 2 199 652 B1**
(45) Veröffentlichungstag und Bekanntmachung des Hinweises auf die Patenterteilung: **22.01.2014**
(21) Anmeldenummer: 09174840.0
(22) Anmeldetag: 03.11.2009
(51) Int. Cl.: F16L 41/08

(54) **Vorrichtung zum dichten Verbinden und zur Befestigung einer Fluidleitung mit einem anderen fluidführenden Bauteil**
Device for sealed connection and fixing of a fluid line with another fluid-transporting component
Dispositif de connexion étanche et de fixation d'une conduite de fluide dotée d'un autre composant conduisant du liquide

(30) Priorität: 09.12.2008 DE 102008055494
(43) Veröffentlichungstag der Anmeldung: 23.06.2010
(73) Patentinhaber: ContiTech Techno-Chemie GmbH, 61184 Karben (DE)
(72) Erfinder: Krumpholz, Marc, 61184 Karben (DE)
(74) Vertreter: Finger, Karsten

(56) Entgegenhaltungen:
- DE-A1- 10 010 529
- DE-A1-102007 007 370

## Beschreibung

Die Erfindung betrifft eine Vorrichtung zum dichten Verbinden und zur Befestigung einer mindestens eine Rohrleitung aufweisenden Fluidleitung an einem weiteren fluidführenden Bauteil oder Aggregat.

Fluidleitungen in Kraftfahrzeugen verlaufen aufgrund des geringen Bauraumes in unterschiedlich gebogenen Strukturen. Die Fluidleitungen weisen Schläuche, Schlauchleitungen und feste Rohrleitungen auf. Die Fluidleitungen haben an ihren Enden Befestigungs- und Verbindungsanschlüsse, die entweder angelötet oder direkt an die Enden der Rohrleitungen angeformt sind. Zusätzlich müssen Halteelemente an die Rohrleitung angebracht sein oder lose auf der Rohrleitung diese umgreifend sitzen, mit denen die Fluidleitungen an dem Gehäuse des Bauteils befestigt werden.

Aus der DE 10 2007 007 370 A1 ist eine Vorrichtung zum Verbinden einer Fluidleitung mit einem fluidführenden Bauteil oder Aggregat bekannt, die alle Merkmale des Oberbegriffs des Anspruchs 1 aufweist.

Aus der DE 692 15 779 T2 ist eine Vorrichtung zum Verbinden einer Fluidleitung mit einem fluidführenden Bauteil oder Aggregat bekannt, bei der eine Halterung für eine Rohrleitung als eine die Rohrleitung aufnehmende Klemmplatte ausgebildet ist, die mittels einer seitlich angeordneten Verschraubung auf einen Bund der Rohrleitung drückt und damit die Rohrleitung in einer Durchflussbohrung des Bauteils festhält.

Aus der DE 102 41 921 B3 ist eine Anschlussvorrichtung für eine Fluidleitung bekannt, bei der die Fluidleitung mit angelötetem Dichtflansch durch einen der Dichtstelle benachbarten, schwenkbar gelagerten Klemmhebel axial beaufschlagt wird. An dem längeren Hebelarm greift eine Spanneinrichtung an, die von einem in das Gehäuse des Bauteils oder Aggregates achsparallel geschraubten Gewindebolzen belastbar ist.

Die Lötverbindung beschränkt die Werkstoffauswahl der Anschlussvorrichtung auf lötbare Werkstoffe. Die Lötstelle muss anschließend gegen Korrosion geschützt werden. Zudem ist der Aufbau dieser Anschlussvorrichtung sehr aufwendig.

Der Erfindung liegt die Aufgabe zugrunde, eine Vorrichtung der eingangs geschilderten Art zu schaffen, die eine sichere, druckdichte und einfach zu montierende Verbindung von Fluidleitungen an anderen Bauteilen oder Aggregaten ermöglicht, ohne dass die Wahl der Werkstoffe auf lötbare Stoffe beschränkt ist.

Die Aufgabe wird erfindungsgemäß dadurch gelöst, dass die Vorrichtung einen Aufnahmehalter aufweist, der mit einem hohlen Einsteckstutzen dichtend in die Durchflussbohrung des Bauteils einsteckbar ist,
dass der Aufnahmehalter einen radialen Flansch mit einer Befestigungslasche aufweist, die eine seitlich zur Rohrleitung versetzt angeordnete Durchgangsbohrung enthält, über die der Aufnahmehalter an dem Bauteil befestigbar ist,
dass der Aufnahmehalter dem Einsteckstutzen koaxial gegenüberliegend eine axial eingeschlitzte, einseitig offene Aufnahmehülse aufweist, deren durch die Schlitze entstandenen Raststege am stirnseitigen Ende mit radial nach innen gerichteten Rastnasen versehen sind,
und dass das zu verbindende Rohrleitungsende in der geschlitzten Aufnahmehülse mit einem einen vergrößerten Durchmesser aufweisenden Längenabschnitt abgedichtet aufgenommen ist.

Durch die Erfindung wird ein einteiliger Aufnahmehalter für das Rohrende geschaffen, der einfach auf dem Rohrende montierbar ist. Das Rohrende wird einfach in die Aufnahmehülse des Aufnahmehalters gesteckt. Die Raststege greifen nach dem Einschieben hinter den im Durchmesser vergrößerten Längenabschnitt des Rohrendes und halten dieses in axialer Richtung formschlüssig fest. Es ist in dieser Lage vor axialem Verschieben gegenüber dem Einsteckstutzen gesichert. Die Montage der Fluidleitung kann somit einfach und positionssicher durchgeführt werden. Der Einsteckstutzen wird in die Durchflussbohrung des Gehäuses eingeführt, bis die am Aufnahmehalter angeformte Befestigungslasche gegen das Gehäuse anliegt. Der Monteur muss nur noch den Schraubbolzen durch die Bohrung in der Befestigungslasche hindurchstecken und in einer Gehäusebohrung festdrehen.

Durch das Anziehen des Schraubbolzens wird der Flansch des Aufnahmehalters gegen das Gehäuse gepresst und hält dadurch auch den Einsteckstutzen in seiner eingesteckten Lage. Die Aufnahmehalter dient zum Fixieren der Fluidleitung, so dass der Einsteckstutzen nicht aus der Durchflussbohrung herausrutschen kann.

Zur dichten Aufnahmen des Rohres werden keine wärmeabgebenden Prozesse wie Löten oder Schweißen notwendig.

In vorteilhafter Ausgestaltung der Erfindung ist der Längenabschnitt kürzer als die Innenlänge der Aufnahmehülse, wobei in dem freien Differenzraum zwischen Stirnseite des Rohrleitungsendes und dem Aufnahmehalter ein Dichtungsring angeordnet ist. Auf diese Weise wird ohne ein weiteres spanabhebendes Verfahren die den Dichtring aufnehmende Ringnut zwischen Einsteckstutzen und Aufnahmehalter gebildet.

In weiterer vorteilhafter Ausgestaltung der Erfindung ist der Aufnahmehalter aus Kunststoff. Die Anschlussvorrichtung zeichnet sich dadurch durch Gewichtserpamis aus und lässt sich durch Spritzgießen einfacher herstellen.

In weiterer vorteilhafter Ausgestaltung der Erfindung sind die Rastnasen an ihren sich radial erstreckenden Enden mit nach innen gerichteten schrägen Anlaufflächen versehen. Das Einschieben und Einrasten des Rohrleitungsendes wird dadurch erleichtert.

In weiterer vorteilhafter Ausgestaltung der Erfindung weist das zu verbindende Rohrleitungsende zumindest in dem mit einem vergrößerten Durchmesser versehenen

Längenabschnitt einen ovalen oder seitlich abgeflachten kreisähnlichen Querschnitt aufweist, der formschlüssig in einen entsprechenden Innenumfang der Aufnahmehülse einschiebbar ist. Die beiden genannten Bauteile sind gegeneinander gegen Verdrehen gesichert.

Durch die Erfindung wird eine formschlüssige und dichte Verbindung zwischen einem Rohrleitungsende und einem Aufnahmehalter einer Anschlussvorrichtung geschaffen, die sich durch geringeren Aufwand auszeichnet.

Anhand der Zeichnung wird nachstehend ein Beispiel der Erfindung näher erläutert. Es zeigt
- Fig.1: einen Schnitt durch eine erfindungsgemäße Vorrichtung zum Befestigen und Verbinden einer Fluidleitung an bzw. mit einem fluidführenden Bauteil;
- Fig.2: einen Halblängsschnitt durch einen Aufnahmehalter mit einem dichtend aufgenommenen Ende der Fluidleitung;
- Fig. 3: in perspektivischer schematischer Explosionsdarstellung einen Aufnahmehalter der Vorrichtung und das korrespondierend geformte Ende einer Rohrleitung;
- Fig. 4: zeigt die Bauteile gemäß Fig. 3 im zusammengesteckten Zustand.
- Fig. 5: zeigt eine modifizierte Ausführungsform der Vorrichtung mit ovalem Querschnitt von Aufnahmehülse und Rohrleitungsende in perspektivischer schematischer Explosionsdarstellung;
- Fig. 6: zeigt die Bauteile gemäß Fig. 5 im zusammengesteckten Zustand.

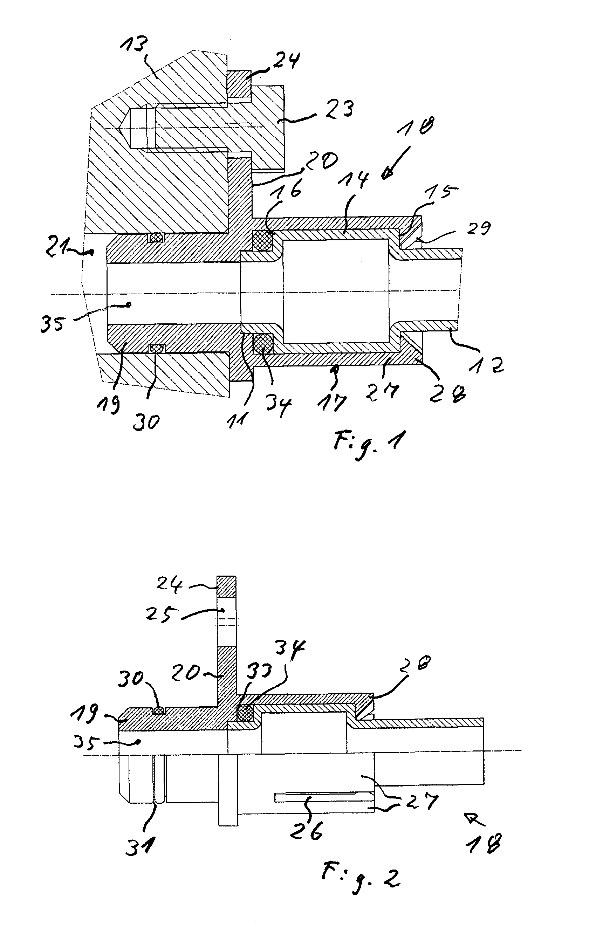

Die in Fig. 1 gezeigte Anschlussvorrichtung weist ein Rohrleitungsende 12 auf, das mit einem weiteren fluidführenden Bauteil 13 fluidtechnisch verbunden ist, wobei das weitere fluidführende Bauteil 13 nur in einem Teilausschnitt gezeigt ist. Das Bauteil 13 kann eine fluidtechnische Einrichtung, wie z.B. ein ölgeschmiertes Lagergehäuse für einen Turbolader im Kraftfahrzeug, sein. Das Rohrleitungsende 12 ist aus einer Aluminiumlegierung und ist ein Bestandteil einer hier nicht näher gezeigten Fluidleitung.

Das Rohrleitungsende 12 weist endseitig einen im Durchmesser vergrößerten Längenabschnitt 14 auf, der aufgrund des Durchmessersprunges einen vorderen und einen hinteren Ringabsatz 15 bzw. 16 bildet. Endseitig läuft das Rohrleitungsende 12 in gleichem Durchmesser wie vor dem Längenabschnitt 14 aus und liegt stirnseitig in einer Stufenbohrung 11 eines Flansches 20 eines aus Kunststoff bestehenden Aufnahmehalters 18.

Dieser Aufnahmehalter 18 weist auf der einen Seite bzw. Fläche des Flansches 20 eine einseitig offene, hohlzylindrische Aufnahmehülse 17 auf, die mit der Stufenbohrung 11 des Flansches 20 fluchtet. Das Rohrleitungsende 12 der Fluidleitung ist in diese Aufnahmehülse 17 eingesteckt.

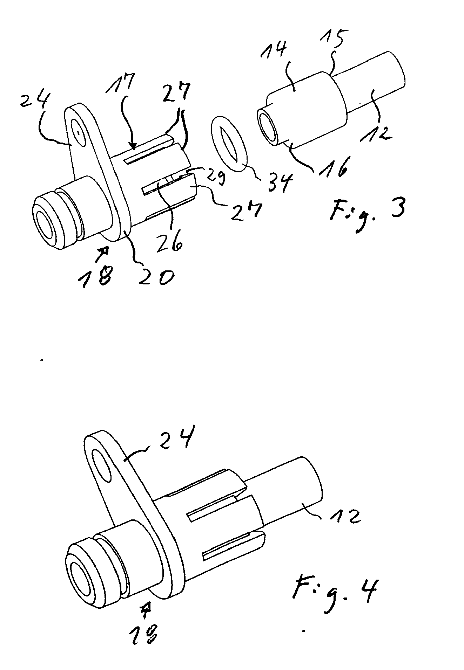

Die das Rohrleitungsende 12 aufnehmende Aufnahmehülse 17 weist im Umfang axiale Schlitze 26 (Fig. 2) auf, die die Zylinderwand der Aufnahmehülse 17 durchschneiden. Zwischen den einzelnen Schlitzen 26 sind so einzelne Raststege 27 gebildet (Fig. 3). Diese Raststege 27 haben an ihrer freien Stirnseite radial nach innen gerichtete Rastnasen 28, die schräge Anlaufflächen 29 aufweisen.

Der Aufnahmehalter 18 weist der Aufnahmehülse 17 fluchtend gegenüberliegend einen Einsteckstutzen 19 auf, der in einer Durchflussbohrung 21 des fluidführenden Bauteils 13 steckt. Dort ist der mit einer Axialbohrung 35 versehene Einsteckstutzen 19 mit einem in einer Ringnut 31 liegenden O-förmigen Dichtungsring 30 gegenüber dem Bauteil 13 abgedichtet. Die Durchflussbohrung 21 fluchtet mit dem Rohrleitungsende 12.

Der Aufnahmehalter 18 ist mittels einer Schraube 23 an dem fluidführenden Bauteil 13 befestigt. Dazu weist der Aufnahmehalter 18 an seinem radialen Flansch 20 eine sich nach oben radial erstreckende Befestigungslasche 24 auf. Die Befestigung mittels der durch eine Durchgangsbohrung 25 der Lasche 24 greifenden Schraube 23 ist zu der Durchflussbohrung 21 achsparallel versetzt angeordnet.

Die axiale Länge zwischen Rastnasen 28 und Außenfläche des Flansches 20 ist etwas größer als die Länge des Rohrabschnittes 14 mit vergrößertem Durchmesser. Der Ringabsatz 15 liegt an der Innenfläche der Rastnasen 28 an. In dem sich so bildenden ringförmigen Differenzringraum 33 zwischen dem Ringabsatz 16 des Rohrleitungsendes 12 und der Außenfläche des Flansches 20 ist ein O-förmiger Dichtungsring 34 unter leichter Pressung eingebracht. Der Dichtungsring 34 zwischen Rohrleitungsende 12 und Aufnahmehalter 18 verhindert eine Leckage zwischen diesen beiden Bauteilen.

Aus den Fig. 3 und 4 wird der Zusammenbau der Anschlussvorrichtung ersichtlich. Auf das stirnseitige Ende des Rohrleitungsendes 12 wird der in Fig. 3 zwischen den Bauteilen dargestellte Dichtungsring 34 gegen den Ringabsatz 16 geschoben. Dann wird das Rohrleitungsende 12 gegen die Anlaufflächen 29 der Rastnasen 28 gedrückt. Die Raststege 27 schwenken nach oben, bis der Längenabschnitt 14 voll in die Aufnahmehülse 17 eingeschoben ist. Durch das Zurückfedern der Raststege 27 fassen die Rastnasen 28 hinter den Ringabsatz 15, so dass das Rohrleitungsende 12 axial gesichert am bzw. im Aufnahmehalter 18 festliegt (Fig. 4).

Die so ausgestattete Fluidleitung wird bei der Endmontage am Kraftfahrzeug mit dem Einsteckstutzen 19 in die Durchflussbohrung 21 des Bauteils 13 gesteckt und über die Befestigungslasche 24 angeschraubt.

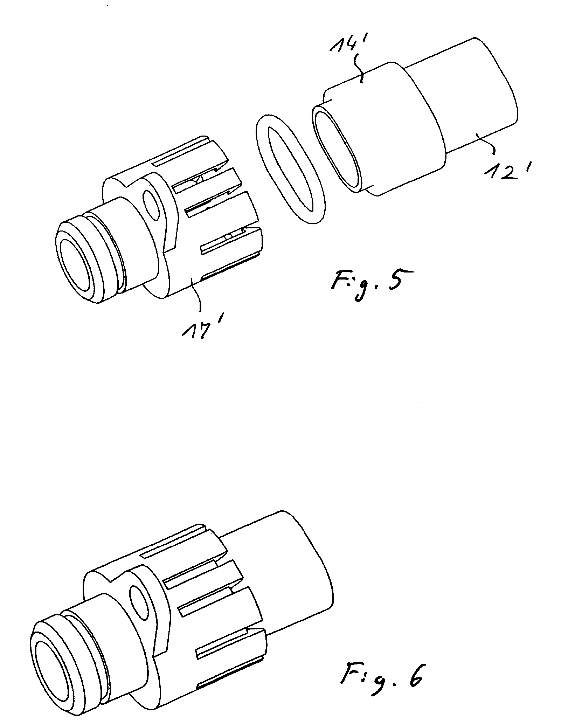

In Fig. 5 ist eine weitere Ausführung des Rohrleitungsendes 12' und der Aufnahmehülse 17' dargestellt. Das Rohrleitungsende 12' weist endseitig den im Durchmesser vergrößerten Längenabschnitt 14' auf, der aber nicht kreisrund ist, sondern eine ovale Querschnittsform oder eine seitlich abgeflachte Kreisform aufweist. Die einseitig offene hohlzylindrische Aufnahmehülse 17' weist einen entsprechend ausgebildeten, ovalen Innenumfang auf und ermöglicht ein formschlüssiges Einschieben des Rohrleitungsendes 12' in eine verdrehsichere Position (Figur 6). Durch den so erzielten Formschluss des Rohrleitungsendes 12' in der Aufnahmehülse 17' wird ein Verdrehen der beiden Bauteile 12' und 17' gegeneinander verhindert.

### Bezugszeichenliste

### (Teil der Beschreibung)

- 11: Stufenbohrung
- 12: Rohrleitungsende
- 13: fluidführende Bauteil
- 14: Längenabschnitt
- 15: Ringabsatz
- 16: Ringabsatz
- 17: Aufnahmehülse
- 18: Aufnahmehalter
- 19: Einsteckstutzen
- 20: Flansch
- 21: Durchflussbohrung
- 23: Schraube
- 24: Befestigungslasche
- 25: Durchgangsbohrung
- 26: Axiale Schlitze
- 27: Raststege
- 28: Rastnasen
- 29: Anlaufflächen
- 30: Dichtungsring
- 31: Ringnut
- 33: Differenzringraum
- 34: Dichtungsring
- 35: Axialbohrung
- 12': Rohrleitungsende, oval
- 14': Längenabschnitt, oval
- 17': Aufnahmehülse, oval

## Patentansprüche

1. Vorrichtung (18) zum Verbinden und zum Befestigen einer mindestens eine Rohrleitung (12) mit einem vergrößerten Durchmesser aufweisenden Längenabschnitt aufweisenden Fluidleitung an einem weiteren fluidführenden Bauteil (13) oder Aggregat,
wobei die Vorrichtung einen Aufnahmehalter (18) aufweist, der einen hohlen Einsteckstutzen (19) aufweist, der dichtend in eine Durchflussbohrung (21) des Bauteils (13) einsteckbar ist,
und wobei der Aufnahmehalter (18) einen radialen Flansch (20) mit einer Befestigungslasche (24) aufweist, die eine seitlich zur zu verbindenden Rohrleitung (12) versetzt angeordnete Durchgangsbohrung (23) enthält, über die Aufnahmehalter (18) an dem Bauteil (13) befestigbar ist,
**dadurch gekennzeichnet,**
**dass** der Aufnahmehalter (18) dem Einsteckstutzen (19) koaxial gegenüberliegend eine axial eingeschlitzte, einseitig offene Aufnahmehülse (17) aufweist, deren durch die Schlitze (26) entstandenen Raststege (27) am stirnseitigen Ende mit radial nach innen gerichteten Rastnasen (28) versehen sind, und
**dass** die geschlitzte Aufnahmehülse (17) derart bemessen ist, dass das zu verbindende Rohrleitungsende (12) in der geschlitzten Aufnahmehülse (17) mit seinem einen vergrößerten Durchmesser aufweisenden Längenabschnitt (14) abgedichtet aufgenommen ist.

2. Vorrichtung (18) nach Anspruch 1, **dadurch gekennzeichnet,**
**dass** in einem freien Differenzraum (33) zwischen Stirnseite des Rohrleitungsendes (12) und dem Aufnahmehalter (18) ein Dichtungsring (34) angeordnet ist,
wobei der freie Differenzraum (33) dadurch gebildet wird, dass der Längenabschnitt (14) kürzer ausgebildet ist als die Innenlänge der Aufnahmehülse (17).

3. Vorrichtung (18) nach Anspruch 1, **dadurch gekennzeichnet,**
**dass** die Vorrichtung (18) aus Kunststoff ist.

4. Vorrichtung (18) nach Anspruch 1, **dadurch gekennzeichnet,**
**dass** die Rastnasen (28) an ihren sich radial erstreckenden Enden mit nach innen gerichteten schrägen Anlaufflächen (29) versehen sind.

5. Vorrichtung (18) nach Anspruch 1, **dadurch gekennzeichnet,**
**dass** die geschlitzte Aufnahmehülse (17') einen ovalen Innenumfang aufweist, der derart bemessen ist, dass das zu verbindende Rohrleitungsende (12'), das zumindest in dem mit einem vergrößerten Durchmesser versehenen Längenabschnitt (14') einen ovalen oder seitlich abgeflachten kreisähnlichen Querschnitt aufweist, formschlüssig in den entsprechenden Innenumfang der Aufnahmehülse (17') einschiebbar ist.

## Claims

1. Device (18) for connecting and fastening a fluid line, having at least one pipeline (12) with a length portion having an enlarged diameter, to a further fluid-carrying component (13) or assembly,
wherein the device has a receiving holder (18) which has a hollow plug-in connecting stub (19) which is pluggable in a sealing manner into a throughflow bore (21) of the component (13),
and wherein the receiving holder (18) has a radial flange (20) having a fastening lug (24) that contains a through-passage bore (23) which is arranged in a manner offset laterally with respect to the pipeline (12) to be connected and via which the device (18) is fastenable to the component (13),
**characterized in that**, coaxially opposite the plug-in connecting stub (19), the receiving holder (18) has an axially slotted receiving sleeve (17) which is open on one side and the latching webs (27) of which, which are produced by the slots (26), are provided at the extreme end with radially inwardly directed latching tabs (28), and
**in that** the slotted receiving sleeve (17) is dimensioned such that the pipeline end (12) to be connected is received in the slotted receiving sleeve (17) in a sealed manner by way of its length portion (14) having an enlarged diameter.

2. Device (18) according to Claim 1, **characterized**
**in that** a sealing ring (34) is arranged in a free difference space (33) between the end side of the pipeline end (12) and the device (18),
wherein the free difference space (33) is formed in that the length portion (14) is configured in a shorter manner than the inner length of the receiving sleeve (17).

3. Device (18) according to Claim 1, **characterized**
**in that** the device (18) is composed of plastics material.

4. Device (18) according to Claim 1, **characterized**
**in that** the latching tabs (28) are provided at their radially extending ends with inwardly directed oblique run-on surfaces (29).

5. Device (18) according to Claim 1, **characterized**
**in that** the slotted receiving sleeve (17') has an oval inner circumference which is dimensioned such that the pipeline end (12') to be connected, which has an oval or laterally flattened circle-like cross section at least in the length portion (14') provided with an enlarged diameter, is introducible in a form-fitting manner in the corresponding inner circumference of the receiving sleeve (17').

## Revendications

1. Dispositif (18) pour la connexion et la fixation d'une conduite de fluide présentant au moins une conduite tubulaire (12) avec une section longitudinale présentant un diamètre élargi au niveau d'un autre composant (13) ou groupe conduisant du liquide,
le dispositif présentant un support de réception (18) qui présente une tubulure d'enfichage creuse (19) qui peut être enfichée de manière hermétique dans un alésage de passage (21) du composant (13), et le support de réception (18) présentant une bride radiale (20) avec une patte de fixation (24) qui contient un alésage traversant (23) disposé de manière décalée latéralement par rapport à la conduite tubulaire (12) à connecter, par le biais duquel alésage traversant le dispositif (18) peut être fixé au composant (13),
**caractérisé en ce que** le support de réception (18) présente une douille de réception (17) ouverte d'un côté, fendue axialement et coaxialement en regard de la tubulure d'enfichage (19), dont les nervures d'encliquetage (27) réalisées par les fentes (26) sont pourvues, au niveau de l'extrémité frontale, d'ergots d'encliquetage (28) orientés radialement vers l'intérieur, et
**en ce que** la douille de réception fendue (17) est dimensionnée de telle sorte que l'extrémité (12) de la conduite tubulaire à connecter soit reçue de manière étanche avec sa section longitudinale (14) présentant un diamètre élargi.

2. Dispositif (18) selon la revendication 1,
**caractérisé en ce que**
dans un espace différentiel libre (33) entre le côté frontal de l'extrémité (12) de la conduite tubulaire et le dispositif (18) est disposée une bague d'étanchéité (34),
l'espace différentiel libre (33) étant formé par le fait que la section longitudinale (14) est réalisée de manière plus courte que la longueur interne de la douille de réception (17).

3. Dispositif (18) selon la revendication 1,
**caractérisé en ce que**
le dispositif (18) est en matière plastique.

4. Dispositif (18) selon la revendication 1,
**caractérisé en ce que**
les ergots d'encliquetage (28) sont pourvus, au niveau de leurs extrémités s'étendant radialement, de surfaces de butée obliques orientées vers l'intérieur (29).

5. Dispositif (18) selon la revendication 1,
**caractérisé en ce que**
la douille de réception fendue (17') présente une périphérie intérieure ovale, qui est dimensionnée de telle sorte que l'extrémité (12') de la conduite tubulaire à connecter, qui présente, au moins dans la section longitudinale (14') pourvue d'un diamètre élargi, une section transversale ovale ou quasiment circulaire aplatie latéralement, puisse être enfoncée par engagement positif dans la périphérie intérieure correspondante de la douille de réception (17').
